# NEUE EUROPÄISCHE PATENTSCHRIFT

(11) **EP 2 846 249 B2**
(45) Veröffentlichungstag und Bekanntmachung des Hinweises auf die Entscheidung über den Einspruch: **23.11.2022**
(45) Hinweis auf die Patenterteilung: 10.05.2017
(21) Anmeldenummer: 14180541.6
(22) Anmeldetag: 11.08.2014
(51) Int. Cl.: G06F 3/0488, G05B 19/409, G05B 19/4069, G05B 19/18, B23F 1/00

(54) **Verzahnmaschine mit multitouch-fähigem Display**
Gear cutting machinewith multi-touch display
Machine à tailler les engrenages avec un display multi-tactile

(30) Priorität: 10.09.2013 DE 102013015024
(43) Veröffentlichungstag der Anmeldung: 11.03.2015
(73) Patentinhaber: Liebherr-Verzahntechnik GmbH, 87437 Kempten (DE)
(72) Erfinder: Karl, Thomas, 87471 Durach (DE); Heider, Marco, 87435 Kempten (DE); Heilmannseder, Tobias, 87487 Wiggensbach (DE)
(74) Vertreter: Laufhütte, Dieter

(56) Entgegenhaltungen:
- DE-A1-102009 017 030
- DE-A1-102010 051 639
- US-A1- 2013 227 473
- "Reduced to the best. Prime Cube Whitepaper Multitouch in industriellen Anwendungen", , 21. März 2011 (2011-03-21), XP055195205, Gefunden im Internet: URL:http://www.primecube.de/fileadmin/user _upload/pdf_de/de_whitepaper_multitouch.pd f [gefunden am 2015-06-11]
- "Mitsubishi CNC M70V Series", Mitsubishi Electric Corporation, September 2011 (2011-09), pages 1-22,
- Katalog NC 62 (Simumerik 840 D) aus 2012

## Beschreibung

Die vorliegende Erfindung betrifft eine Verzahnmaschine mit einer Maschinensteuerung sowie wenigstens einem Display zur Anzeige maschinenrelevanter Parameter. Derzeit umfassen Verzahnmaschinen ein Display, das zur Wiedergabe diverser Betriebsparameter der Verzahnmaschine genutzt wird. Notwendige Eingaben zur Steuerung der Verzahnmaschine werden über ein separates externes Bedienelement durch den Bediener getätigt. Das Bedienelement umfasst in der Regel ein oder mehrere mechanische Tasten bzw. Tastenfelder, über die durch Druckbetätigung gewisse Steuerbefehle eingebbar sind bzw. Konfigurationsparameter programmiert werden können. Der Bediener kann anhand des Displayelementes die eingegebenen Steuerbefehle überprüfen bzw. die aktuellen Betriebsparameter ablesen. Die Darstellung ist dabei fest vorgegeben und nicht individuell an den einzelnen Nutzer anpassbar. Ein solche Maschinensteuerung bzw. Bedienung erfüllt zwar ihren Zweck, ist jedoch nicht besonders komfortabel.

Eine Multitouchsteueung für eine Spritzgiessmaschine ist aus der DE 10 2010 051 639 A1 bekannt. Auch die DE 10 2009 017 030 A1 schlägt vor, die Industriesteuerung einer Industriemaschine mittels einer multitouchfähigen Oberfläche zu verwirklichen. Ein weiterer Anwendungsfall für Industriemaschinen ist aus dem Artikel "Reduced to the best. Prime cup, white paper multitouch in industriellen Anwendungen" vom 21.03.2011 offenbart.

Die Aufgabe der vorliegenden Erfindung besteht darin, eine Verzahnmaschine aufzuzeigen, die eine bessere und komfortablere Handhabung ermöglicht.

Diese Aufgabe wird durch eine Verzahnmaschine mit den Merkmalen des Anspruchs 1 gelöst. Vorteilhafte Ausgestaltungen der Maschine sind Gegenstand der sich an den Hauptanspruch anschließenden abhängigen Ansprüche.

Gemäß Anspruch 1 wird eine Verzahnmaschine mit einer Maschinensteuerung sowie wenigstens einem Display zur Anzeige maschinenrelevanter Parameter vorgeschlagen. Erfindungsgemäß ist das wenigstens eine Display multitouchfähig und eine Bedienereingabe zur Steuerung der Verzahnmaschine erfolgt zumindest teilweise durch Berührung des Displays. Bildschirm und Multi-Touch-Screen sind besonders bevorzugt kombiniert und liegen übereinander.

Insbesondere kann der Bediener auf Grundlage verschiedener Multifingergesten entsprechende Steuerbefehle in die Verzahnmaschine eingeben, was eine besonders komfortable Bedienung der Verzahnmaschine erlaubt. Der Bediener kann die am Bildschirm angezeigten Objekte antippen, verschieben, in ihrer Größe verändern, rotieren oder mehrere Objekte gleichzeitig markieren. Populäre Multifingeranwendungen sind das Zoomen und Drehen von Objekten, indem man zwei Finger voneinander wegbewegt oder sie zueinander rotiert.

Das wenigstens eine multitouchfähige Display kann zum Beispiel eine resistive, kapazitive, optische oder induktive berührungsempfindliche Oberfläche aufweisen. Denkbar ist es, dass die Verzahnmaschine sowohl nicht-touchfähige als auch touchfähige Displays aufweist.

Der Einsatz eines multitouchfähigen Displays gestattet nicht nur eine optimierte und umfangreichere Mensch-Maschine-Interaktion, sondern es eröffnen sich umfangreiche Möglichkeiten zur Implementierung eines neuartigen Bedienkonzeptes. Es ist vorstellbar, dass die visuelle Displaydarstellung der ein oder mehreren Maschinenparameter individuell konfigurierbar ist. Idealerweise ist die visuelle Darstellung ein oder mehrerer maschinenrelevanter Parameter mittels Eingabe über das berührungsempfindliche Display hinsichtlich der Darstellungseigenschaften als auch hinsichtlich des Umfangs der dargestellten Informationen konfigurierbar.

Im Hinblick auf den Umfang der dargestellten maschinenrelevanten Parameter lässt sich die Parameteranzahl variieren, um dem Bediener auf Wunsch eine umfassendere Informationsdarstellung zu gewährleisten oder um durch Verringerung des Informationsgehaltes die Übersichtlichkeit der dargestellten Informationen zu wahren. Idealerweise bietet sich dem Bediener die Möglichkeit jeden verfügbaren maschinenrelevanten Parameter für die Darstellung auszuwählen oder temporär einzublenden. Unnötige oder weniger relevante Parameter können ausgeblendet bzw. im Hintergrund dargestellt werden.

Denkbar ist eine individuelle Anpassung der Farbe, Musterung, Helligkeit, Kontrastwirkung gegenüber dem Hintergrund, Glanzeffekte, Spiegelung und Reflexion, Schattierungen, etc. Die Anpassung kann über das multitouchfähige Display erfolgen.

Erfindungsgemäß sind Mittel vorgesehen, die eine benutzerabhängige Displaydarstellung ein oder mehrerer maschinenrelevanter Parameter zulassen. Unterschiedliche Darstellungsskins /-themes sind vorzugsweise in einem Darstellungsprofil hinterlegbar.

Möglich ist auch die Erstellung bedienerabhängiger Profile. Erfindungsgemäß weist die Verzahnmaschine Mittel zur Bedienererkennung und/oder Bedienerverifikation /-authentifizierung auf. Idealerweise wird nach Eingabe der Benutzerkennung automatisch eine benutzerabhängige Displaydarstellung generiert bzw. angezeigt.

Vorzugsweise lassen sich ein oder mehrere Bedienerprofile hinterlegen, die durch den Bediener manuell oder automatisch aufrufbar sind und entsprechende Displaydarstellungen automatisch anzeigen. Der Nutzer kann somit einmalig die bevorzugte Art der Darstellung konfigurieren und diese in seinem persönlichen Profil hinterlegen. Eine benutzerabhängige Displaydarstellung ist insbesondere dann vorteilhaft, wenn die Verzahnmaschine durch mehrere Benutzer bedient werden soll. Durch Auswahl des jeweiligen Profils kann jeder Bediener seine individuelle Displaydarstellung aufrufen.

Erfindungsgemäß ist die Displaydarstellung in dem multitouchfähigen Display in ein oder mehrere Fenster unterteilt. Jedes Fenster dient dabei zur Darstellung einer bestimmten Anzahl an maschinenrelevanten Parametern. Erfindungsgemäß ist jedes Fenster über das Touchdisplay individuell hinsichtlich der Fenstergröße sowie hinsichtlich der Art und/oder des Umfangs der dargestellten maschinenrelevanten Parameter konfigurierbar. Die Fenster lassen sich beispielsweise an einer beliebigen Stelle des Displays platzieren. Gleiches gilt für die Fenstergröße, die mit Hilfe einer Multifingergeste besonders einfach änderbar ist.

In diesem Zusammenhang ist es ebenso denkbar, dass die Displaydarstellung nicht nur in ein oder mehrere Fenster unterteilt ist, sondern in ein oder mehrere virtuelle Bildschirme, zwischen denen mit Hilfe einer Wischbewegung hin- und herblätterbar ist.

Zur einfachen Erweiterung der Maschinenfunktionalität kann es vorgesehen sein, dass die Maschinensteuerung derart ausgeführt ist, so dass ein oder mehrere Fremdapplikationen auf der Maschine installierbar und ausführbar sind. Damit kann die Verzahnmaschine gegenüber den durch den Hersteller vorgesehenen Basisfunktionen durch Installation diverser Fremdapplikationen hinsichtlich der Funktionalität erweitert werden. Insbesondere können die eine oder mehreren installierten und ausführbaren Fremdapplikationen auf die Ein- und Ausgabemöglichkeit des berührungsempfindlichen Displays zurückgreifen. Der Kunde hat somit die Möglichkeit, die Funktionalität der Verzahnmaschine durch eigene Applikationen an seine persönlichen Wünsche anzupassen bzw. zu erweitern.

Darüber hinaus kann die Verzahnmaschine ein oder mehrere Speichermittel zur Speicherung ein oder mehrerer Videodateien aufweisen. Mittels der Maschinensteuerung kann die Wiedergabe der ein oder mehreren gespeicherten Videodateien über das multitouchfähige Display erfolgen. Die Videodateien können vorzugsweise Schulungsfilme enthalten, die dem Kunden eine videogeführte Einführung in die Funktion sowie Konfiguration der Verzahnmaschine bieten. Einzelne Videodateien sind durch den Bediener über das multitouchfähige Display ausführbar und über das Displayelement anzeigbar.

Auf dem Speichermittel sind verschiedene Datenformate u.a. Videoformate speicherbar. Im Prinzip ist alles speicher- und wiedergebbar was ein aktuelles Betriebssystem, beispielsweise Windows 7 verarbeiten kann. Das können PDF-Dokumente, CAD-Daten, Bilder, Videos, etc. sein.

Weiterhin kann die Verzahnmaschine ein oder mehrere Videoaufnahmegeräte aufweisen sein. Denkbar ist es, dass derartige interne Videokameras im Bereich des Maschinentischs bzw. Werkstückaufnahme- und/oder Werkzeugaufnahme angeordnet sind und einzelne Verzahnungsvorgänge erfassen. Oftmals sind die ausgeführten Prozesse der Verzahnmaschine vom Maschinenpult der Verzahnmaschine nicht zugänglich bzw. einsehbar. Mit Hilfe der internen Videokamera lassen sich die Vorgänge auf dem Display bequem anzeigen und bieten dem Nutzer Einblick in den Verzahnungsprozess. Darüber hinaus können die bereitgestellten Bilddateien der ein oder mehreren internen Videokameras auch auf ein internes oder alternativ externes Speichermittel aufgezeichnet und für die spätere Wiedergabe über das multitouchfähige Display oder ein anderes Display bereitgestellt werden.

Weitere Vorteile und Einzelheiten der Erfindung sollen im Folgenden anhand mehrerer Zeichnungen näher erläutert werden. Es zeigen:

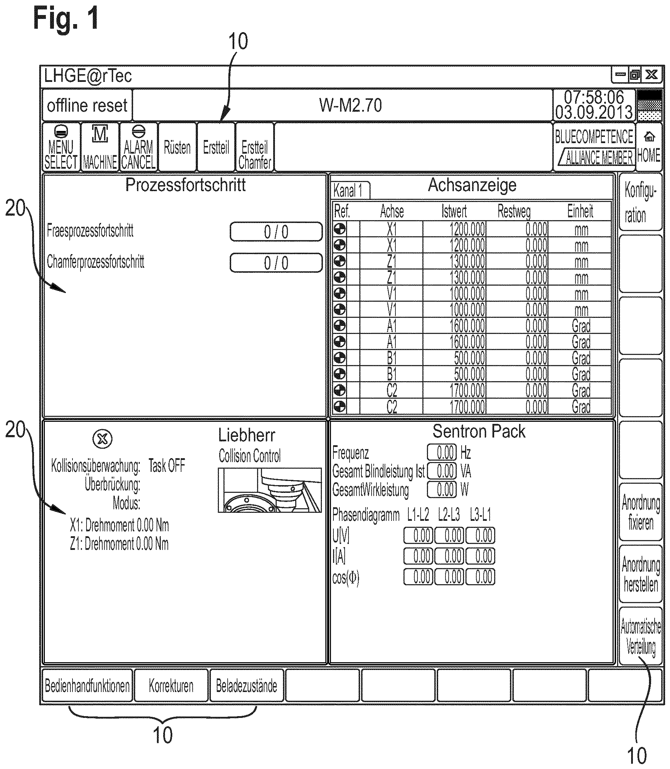

- Figur 1-5:: verschiedene Screenshots der auf dem Multitouchdisplay angezeigten Bedienoberfläche der erfindungsgemäßen Verzahnmaschine.

Die Figuren 1 bis 5 zeigen unterschiedliche Darstellungen der Bedienoberfläche der erfindungsgemäßen Verzahnmaschine, wobei sich die angezeigten Objekte der Bedienoberfläche durch Berührung des multitouchfähigen Displays der Verzahnmaschine auswählen, verschieben, vergrößern bzw. verkleinern, rotieren, etc. lassen. Die Bedienung erfolgt vorzugsweise per einfacher Berührung des Display bzw. durch Multifingergesten. Die Multitouchoberfläche bietet unterschiedliche Bedienoptionen, beispielsweise eine "touch and hold", nur "touch" oder auch eine "touch and wipe" Funktion.

Der grundlegende Menüaufbau wird im Folgenden anhand der Figurendarstellungen näher erläutert. In den Figuren sind am oberen, rechten und unteren Bildschirmrand diverse Icons 10 fest angeordnet, die durch Berührung einen direkten Zugang zu einem Untermenü (Rüsten, Erstteil, Konfiguration, etc.) oder die unmittelbare Ausführung eines Maschinenbefehls (beispielsweise "Alarm Cancel") ermöglichen. Die Einblendung dieser Icons ist fest vordefiniert und für jede individuell gestaltete Bedienoberfläche identisch. Die Icons sind Bestandteil des sogenannten Hauptfensters.

Im Zentrum des Hauptfensters sind in Figur 1 vier Unterfenster 20 angezeigt, die hinsichtlich ihrer Größe identisch und symmetrisch zueinander angeordnet sind. Diese Unterfenster dienen zur Darstellung unterschiedlicher Maschinenparameter, wobei unterschiedliche Unterfenster, d.h. verschiedene Prozess-Ansichten bzw. Unterkategorien, abbilden. Die grafische Ausgestaltung sowie den Fensterinhalt kann der Bediener individuell gestalten. Eine Konfiguration der dargestellten Informationen besteht nur für diese Unterkategorien bzw., Unterfenster, bei denen eine derartige Auswahlmöglichkeit sinnvoll erscheint. Die Anzahl der dargestellten Unterfenster lässt sich ebenfalls frei festlegen.

Figur 1 zeigt vier Unterfenster, wobei das erste Fenster den aktuellen Prozessfortschritt der Werkstückbearbeitung betrifft. Im zweiten rechts daneben angeordneten Unterfenster ist die Achsanzeige dargestellt, die für eine konfigurierte Anzahl der maschinengesteuerten CNC-Achse den aktuellen Istwert ausgibt und den geplanten Restweg für die Verzahnbearbeitung darstellt.

In den beiden darunterliegenden Fenstern ist links zum einen die Kollisionsüberwachung dargestellt, die während des Verzahnprozesses aktiv ist und einzelne Maschinenkomponenten, wie beispielsweise den Bearbeitungskopf, eine Vorrichtung zum Aufspannen des Werkstückes, sowie das Werkstück selbst, auf gegenseitige Kollision hin überwacht. Hierzu werden unterschiedliche Parameter und gegebenenfalls eine drohende Kollisionsgefahr angezeigt. Rechts daneben ist eine Prozessansicht dargestellt, die einzelne Leistungsparameter der verwendeten Achsantriebe zeigt.

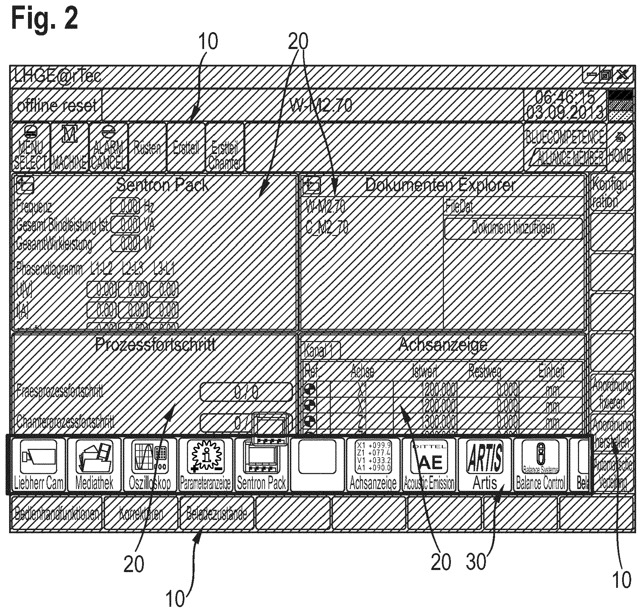

Figur 2 zeigt nun die Prozessansichtsauswahlleiste 30 am unteren Bildschirmrand, die nur hier in dieser Darstellung zur besseren Übersicht der Bedienoberfläche hervorgehoben wird. Die Prozessansichtsauswahlleiste dient zum Auswählen der einzelnen Prozessansichten, d.h. der einzelnen Unterfenster, für die Darstellung im Hauptbildschirm. Diese Prozessansichtauswahlleiste kann mit einer einfachen Wischbewegung durchrotiert werden, bis das gewünschte Unterfenster in der Leiste sichtbar ist und anschließend durch Berührung in den Hauptbildschirm gezogen werden kann. Das ausgewählte Unterfenster kann an der gewünschten Stelle im Hauptfenster positioniert werden.

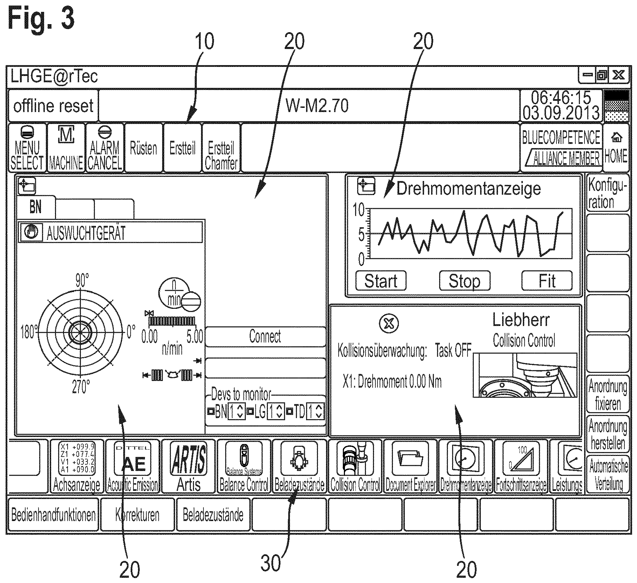

Figur 3 zeigt eine individuelle abweichende Anordnung der einzelnen Prozessfenster 20, die anders als in Figur 1 nicht symmetrisch ist. Zudem wurden die Fenstergrößen der Prozessansichten geändert und nach den Vorlieben des Bedieners konfiguriert. Figur 3 zeigt auch, dass einzelnen Prozessansichten nicht zwingend nebeneinander, sondern auch hintereinander positionierbar sind, wobei das durch Berührung aktivierte Unterfenster in den Vordergrund tritt. Ebenso besteht die Möglichkeit ein Unterfenster zu priorisieren, so dass dieses stets im Vordergrund verbleibt. Die individuell gestaltete Bedienoberfläche lässt sich als Profil, idealerweise als Benutzerprofil, auf der Verzahnmaschine hinterlegen und steht für einen späteren Abruf zur Verfügung. Jeder Bediener kann folglich bei Inbetriebnahme der Verzahnmaschine diese schnell durch Abruf eines gespeicherten Profils an seine Bedürfnisse anpassen.

Die Figur 3 zeigt exemplarisch drei Prozessansichten, die zum einen das Auswuchtgerät, eine Drehmomentanzeige sowie ebenfalls die Kollisionsüberwachung darstellen.

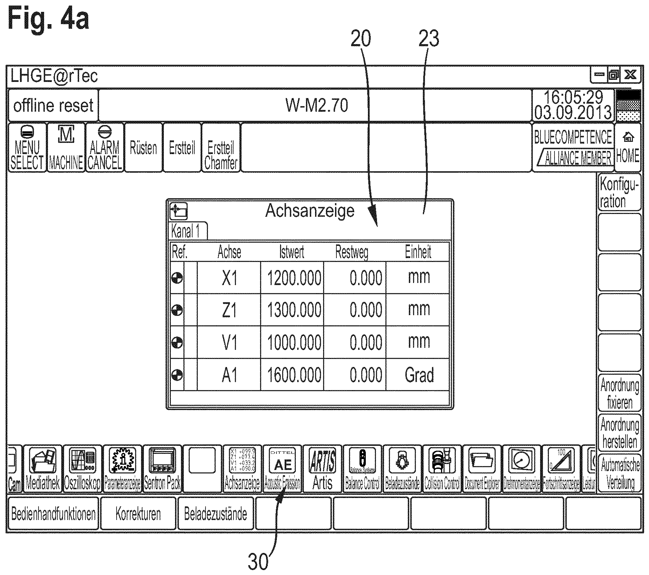

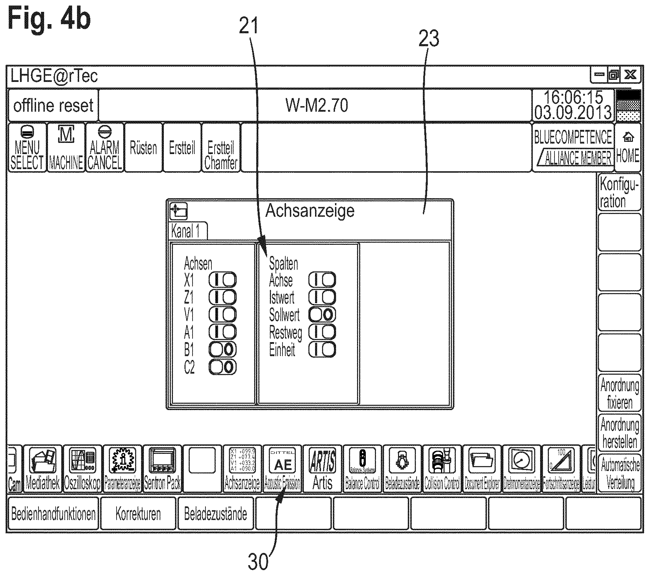

In der Figur 4a ist hingegen im Hauptfenster lediglich eine Prozessansicht 20, nämlich die Achsanzeige, eingeblendet. Alle weiteren Prozessansichten wurden aus Gründen der besseren Übersichtlichkeit entfernt. Auch der eingeblendete Informationsgehalt einer einzelnen Prozessansicht 20, beispielsweise der Achsanzeige, ist für gewisse Prozessansichten 20 frei konfigurierbar. Im Beispiel der Figur 4a zeigt die Achsanzeige die X1-, Z1-, V1-, A1 -Achse mit ihrer jeweiligen Position an. Sollen mehr oder weniger Achsen angezeigt werden, wird auf die Kopfleiste 23 der Prozessansicht 20 "Achsanzeige" getippt. Mit einer automatischen Flippbewegung wird die Fensterrückseite 21 gemäß Figur 4b eingeblendet. Die entsprechenden Auswahlschalter ermöglichen die individuelle Auswahl einzelne Achsen für die Einblendung in der Fenstervorderseite 20 gemäß Figur 4a.

In der Figur 4b sind beispielsweise die Achsen X1, Z1, V1, A1 aktiviert und die Achsen B1, C2 deaktiviert. Neben der Auswahl der anzuzeigenden Achsen können auch die dargestellten Informationen bezüglich der ausgewählten Achsen variiert werden. Hierbei stehen beispielsweise unterschiedliche Informationen pro Achse, im Unterpunkt "Spalten" zur Verfügung. Durch nochmaliges Antippen der Kopfleiste 23 der Fensterrückseite 21 wird das Fenster wieder in die Ausgangssituation, d.h. auf die Fenstervorderseite 20 gemäß Figur 4a geklappt, und die ausgewählten Achsen inklusive der ausgewählten Informationen werden angezeigt. Diese Flippfunktion gibt es für alle konfigurierbaren Fenster der einzelnen Prozessansichten.

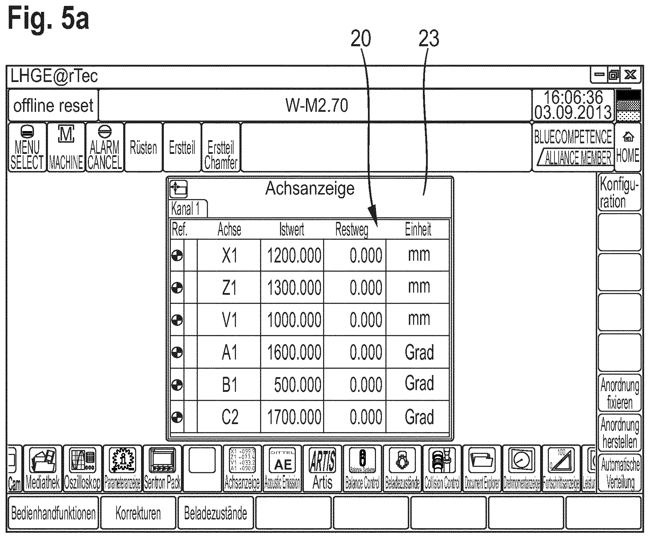

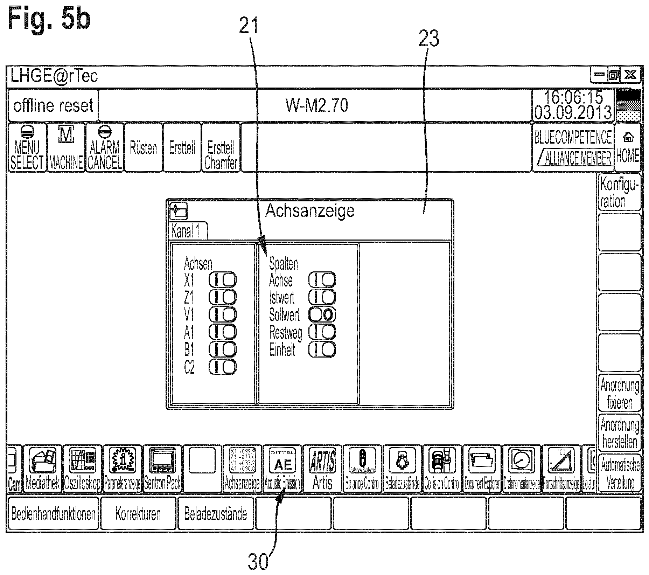

Die Figuren 5a, 5b zeigen ein weiteres Beispiel für eine Achskonfiguration mit zugehörigem Auswahlfenster. Hierbei wurde auf der Fensterrückseite 21 die Einblendung sämtlicher verfügbaren Maschinenachsen der Verzahnmaschine aktiviert, wodurch diese im Hauptfenster der Fenstervorderseite 20 der Achsanzeige vollständig eingeblendet werden.

## Patentansprüche

1. Verzahnmaschine mit einer Maschinensteuerung sowie wenigstens einem Display zur Anzeige maschinenrelevanter Parameter,
wobei das Display multitouchfähig ist und eine Bedienereingabe zur Steuerung der Verzahnmaschine mittels Multifingergesten über das Display ermöglicht,
**dadurch gekennzeichnet,**
**dass** die Displaydarstellung in ein oder mehrere Fenster (20) unterteilt ist, jedes Fenster (20) eine bestimmte Anzahl an maschinenrelevanten Parametern darstellt, und jedes Fenster (20) hinsichtlich der Fenstergröße und Art und/oder Umfang der dargestellten maschinenrelevanten Parameter über das Touchdisplay individuell konfigurierbar ist, wobei ein Fenster eine Achsanzeige darstellt, die für eine konfigurierbare Anzahl der maschienengesteuerten CNC-Achsen Informationen ausgibt, wobei ein Tippen auf eine Kopfleiste des Fensters eine automatische Flippbewegung auslöst, durch welche eine Fensterrückseite mit Auswahlschaltern eingeblendet wird, welche die individuelle Auswahl einzelner Achsen für die Einblendung in der Fenstervorderseite ermöglichen, und **dadurch gekennzeichnet, dass** die Verzahnmaschine Mittel für eine benutzerabhhängige Displaydarstellung eines oder mehrerer maschinenrelevanter Parameter und Mittel zur Bedienererkennung und/oder Bedienerverifizierung und/oder Bedienerauthentifizierung aufweist.

2. Verzahnmaschine nach Anspruch 1, **dadurch gekennzeichnet, dass** die Displaydarstellung eines oder mehrerer maschinenrelevanter Parameter mittels Toucheingabe über das Display in ihren Eigenschaften und Umfang konfigurierbar ist.

3. Verzahnmaschine nach einem der Ansprüche 1 oder 2, **dadurch gekennzeichnet, dass** durch die Mittel für eine benutzerabhhängige Displaydarstellung Bedienerprofile generierbar bzw. speicherbar und wiederaufrufbar sind.

4. Verzahnmaschine nach einem der vorhergehenden Ansprüche, **dadurch gekennzeichnet, dass** die Maschinensteuerung der Verzahnmaschine derart ausgeführt ist, so dass ein oder mehrere Fremdapplikationen auf der Maschine installierbar und ausführbar sind, wobei durch die wenigstens eine Fremdapplikation die Ein-/Ausgabemöglichkeit des multitouchfähigen Displays nutzbar ist.

5. Verzahnmaschine nach einem der vorhergehenden Ansprüche, **dadurch gekennzeichnet, dass** die Verzahnmaschine ein Speichermittel zur Speicherung einer oder mehrerer Videodateien aufweist und die Maschinensteuerung die Wiedergabe einer oder mehrerer Videodateien über das Display ermöglicht.

6. Verzahnmaschine nach einem der vorhergehenden Ansprüche, **dadurch gekennzeichnet, dass** die Verzahnmaschine wenigstens eine interne Videokamera aufweist, wobei die aufgenommenen Bilddateien auf dem Display wiedergebbar sind und/oder auf ein internes oder externes Speichermittel aufzeichenbar sind.

7. Verzahnmaschine nach einem der vorhergehenden Ansprüche, **dadurch gekennzeichnet, dass** die Verzahnmaschine zwei oder mehr Displays, insbesondere multitouchfähige Displays aufweist.

## Claims

1. A gear cutting machine having a machine control as well as at least one display for displaying machine-relevant parameters,
wherein the display is multitouch-operable and allows a user input for controlling the gear cutting machine by means of multifinger gestures over the display,
**characterized in that**
the display representation is divided into one or more windows (20), each window (20) represents a specific number of machine-relevant parameters and each window (20) is individually configurable over the touch display with respect to the window size and the type and/or extent of the machine-relevant parameters shown; with a window showing an axial display that outputs information for a configurable number of the machine-controlled CNC axles, with a tap on a top bar of the window triggering an automatic flip movement by which a rear window side with selection switches is displayed that enables the individual selection of individual axles for a display in the front window side; and **characterized in that** the gear cutting machine has means for a user-dependent display representation of one or more machine-relevant parameters and means for operator recognition and/or operator verification and/or operator authentication.

2. A gear cutting machine in accordance with claim 1, **characterized in that** the display representation of one or more machine-relevant parameters can be configured with respect to their properties and extent by means of touch input over the display.

3. A gear cutting machine in accordance with one of the claims 1 or 2, **characterized in that** user profiles are able to be generated or stored and accessed again by the means for a user-dependent display representation.

4. A gear cutting machine in accordance with one of the preceding claims, **characterized in that** the machine control of the gear cutting machine is configured such that one or more third-party applications can be installed and executed on the machine, with the input/output possibility of the multitouch-operable display being able to be used by the at least one third-party application.

5. A gear cutting machine in accordance with one of the preceding claims, **characterized in that** the gear cutting machine has a storage means for storing one or more video files and the machine control allows the reproduction of one or more video files over the display.

6. A gear cutting machine in accordance with one of the preceding claims, **characterized in that** the gear cutting machine has at least one internal video camera, with the recorded image files being displayable on the display and/or being able to be recorded on an internal or external storage means.

7. A gear cutting machine in accordance with one of the preceding claims, **characterized in that** the gear cutting machine has two or more displays, in particular multitouch-operable displays.

## Revendications

1. Machine à tailler les engrenages comprenant une commande de machine ainsi qu'au moins un écran destiné à l'affichage de paramètres essentiels de la machine,
l'écran étant multi-tactile et permettant une entrée par un opérateur pour la commande de la machine à tailler les engrenages au moyen de gestes avec plusieurs doigts par le biais de l'écran,
**caractérisée en ce que**
la représentation à l'écran est divisée en une ou plusieurs fenêtres (20), chaque fenêtre (20) représente un certain nombre de paramètres essentiels de la machine, et chaque fenêtre (20) peut être configurée individuellement par le biais de l'écran tactile en ce qui concerne la taille de la fenêtre et le type et/ou l'étendue des paramètres essentiels de la machine représentés, une fenêtre représentant un affichage d'axes, qui fournit en sortie des informations pour un nombre configurable des axes CNC commandés par ordinateur, une pression du doigt sur la barre de titre de la fenêtre déclenchant un mouvement de basculement automatique, faisant apparaître une face arrière de la fenêtre avec des commutateurs de sélection, lesquels permettent la sélection individuelle d'axes distincts afin de les afficher sur la face avant de la fenêtre, et **caractérisée en ce que** la machine à tailler les engrenages comporte des moyens pour une représentation à l'écran dépendante de l'utilisateur d'un ou de plusieurs paramètres essentiels de la machine et des moyens de reconnaissance d'opérateur et/ou de vérification d'opérateur et/ou d'authentification d'opérateur.

2. Machine à tailler les engrenages selon la revendication 1, **caractérisée en ce que** les caractéristiques et l'étendue de la représentation à l'écran d'un ou de plusieurs paramètres essentiels de la machine peuvent être configurées au moyen d'une entrée tactile par le biais de l'écran.

3. Machine à tailler les engrenages selon l'une des revendications 1 ou 2, **caractérisée en ce que** des profils d'opérateur peuvent être générés et/ou enregistrés et appelés de nouveau par les moyens pour une représentation à l'écran dépendante de l'utilisateur.

4. Machine à tailler les engrenages selon l'une des revendications précédentes, **caractérisée en ce que** la commande de machine de la machine à tailler les engrenages est conçue de telle manière qu'une ou plusieurs applications externes peuvent être installées et exécutées sur la machine, l'au moins une application externe permettant d'utiliser la possibilité d'entrée/sortie de l'écran multi-tactile.

5. Machine à tailler les engrenages selon l'une des revendications précédentes, **caractérisée en ce que** la machine à tailler les engrenages comporte un moyen de stockage pour stocker un ou plusieurs fichiers vidéo et la commande de machine permet la lecture d'un ou de plusieurs fichiers vidéo par le biais de l'écran.

6. Machine à tailler les engrenages selon l'une des revendications précédentes, **caractérisée en ce que** la machine à tailler les engrenages comporte au moins une caméra vidéo interne, les fichiers images enregistrés pouvant être lus sur l'écran et/ou pouvant être enregistrés sur un moyen de stockage interne ou externe.

7. Machine à tailler les engrenages selon l'une des revendications précédentes, **caractérisée en ce que** la machine à tailler des engrenages comporte deux écrans, en particulier écrans multi-tactiles, ou plus.
